(19) Europäisches Patentamt
European Patent Office
Office européen des brevets

(11) **EP 2 952 874 B1**

(12) **EUROPÄISCHE PATENTSCHRIFT**

(45) Veröffentlichungstag und Bekanntmachung des Hinweises auf die Patenterteilung:
**28.12.2016 Patentblatt 2016/52**

(51) Int Cl.:
***G01N 9/00*** *(2006.01)*

(21) Anmeldenummer: **15455005.7**

(22) Anmeldetag: **27.04.2015**

(54) **VERFAHREN ZUR ERMITTLUNG EINES DICHTEWERTES**

METHOD FOR DETERMINING A DENSITY VALUE

PROCÉDÉ DE DÉTERMINATION D'UNE VALEUR DE DENSITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.05.2014 AT 503782014**

(43) Veröffentlichungstag der Anmeldung:
**09.12.2015 Patentblatt 2015/50**

(73) Patentinhaber: **Anton Paar GmbH 8054 Graz-Straßgang (AT)**

(72) Erfinder: **Umfer, Christof 8041 Graz (AT)**

(74) Vertreter: **Wildhack & Jellinek Patentanwälte Landstraßer Hauptstraße 50 1030 Wien (AT)**

(56) Entgegenhaltungen:
**AT-A1- 505 985     AT-A4- 505 937**
**AT-B- 409 551     US-B2- 8 707 763**

**Beschreibung**

Die Erfindung betrifft ein Verfahren gemäß dem Oberanspruch des Patentanspruches 1.

Die Messung der Dichte von fluiden Medien mit einem Biegeschwinger beruht auf der Tatsache, dass die Schwingung eines mit einer zu untersuchenden Probe gefüllten Hohlkörpers von der Füllung des Hohlkörpers, insbesondere von der Masse bzw., wenn das Volumen konstant ist, von der Dichte des eingefüllten Mediums abhängt.

Ein Messgerät enthält als schwingfähiges Gebilde einen Biegeschwinger, der von einem hohlen, U-förmig gebogenen, gläsernen oder metallischen Rohr gebildet ist. Dieses Rohr wird auf elektronischem Weg zu einer Schwingung bzw. Resonanzschwingung angeregt. Die beiden Schenkel des U-Rohrs bilden die Federelemente des Biegeschwingers. Die Eigenfrequenz des U-förmigen Schwingerrohres wird nur von jenem Teil der Probe beeinflusst, welcher an der Schwingung tatsächlich teilnimmt. Das an der Schwingung teilnehmende Volumen ist durch die ruhenden Schwingknoten an den beiden Einspannstellen des Rohres begrenzt. Ist der Schwinger mindestens bis zu den Einspannstellen mit der Probe gefüllt, nimmt immer dasselbe, genau definierte Volumen an der Schwingung teil und die Masse der Probe kann daher proportional zu ihrer Dichte angenommen werden. Eine Überfüllung des Schwingers über die Einspannstellen hinaus ist für die Messung belanglos. Aus diesem Grund können mit dem Schwinger auch Dichten von Medien gemessen werden, die den Schwinger bzw. das Rohr durchströmen.

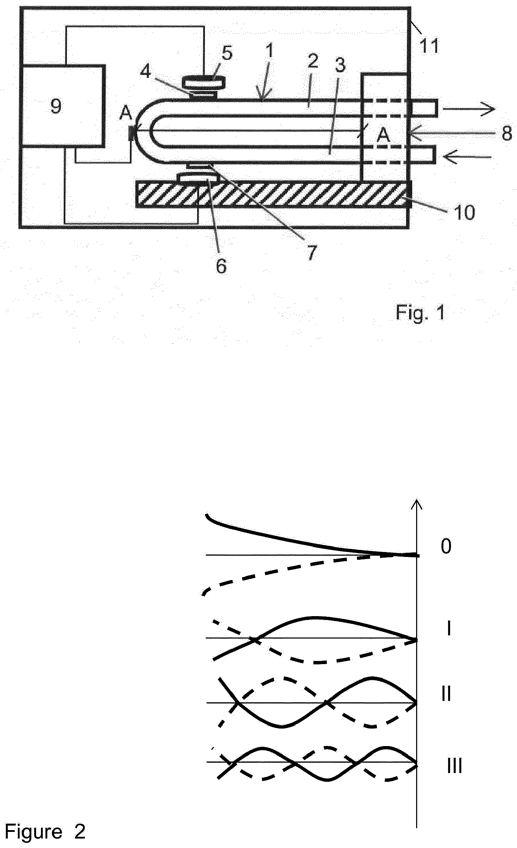

Bei einem "Y-Schwinger", so wie in Fig. 1 schematisch dargestellt, schwingt das U-förmig gebogene Rohr 1 senkrecht zu der Ebene, die durch die beiden Schenkel 2, 3 des Rohres 1 aufgespannt wird. Prinzipiell sind auch Schwingungsmoden anregbar, bei denen die Schenkel 2, 3 des gebogenen Rohres 1 in dieser Ebene gegeneinander schwingen. Für den Schwinger sind bestimmte Resonanzfrequenzen vorhanden, in denen der Schwinger bzw. das Rohr schwingen.

Neben Apparatekonstanten, z.B. Material und Abmessungen des Schwingers, bestimmt die Dichte des zu untersuchenden Fluids die spezifischen Frequenzen, in denen das U-Rohr in Resonanz schwingt. Verwendet man also immer dasselbe Rohr, insbesondere Glasrohr oder Metallrohr, so variieren die Eigenschaften des Schwingers mit der Dichte der Flüssigkeit. Die Resonanz-Frequenzen werden im Hinblick auf die Anregung und Abnahme der Schwingungen ausgewertet und aus der Periodendauer wird die Dichte des eingefüllten Fluiden bestimmt. Der Schwinger wird mit Fluiden bekannter Dichte kalibriert bzw. justiert, sodass die Messwerte direkt auswertbar werden.

Derartige Dichteschwinger bzw. Biegeschwinger sind in unterschiedlichen Ausführungsformen hinsichtlich Anregung und Abnahme der Schwingung, z.B. mit Magnetspulen und Magneten, piezoelektrischen Elementen usw., bekannt.

Bei dem in Fig. 1 im Prinzip dargestellten, bekannten Biegeschwinger wird die Schwingung direkt am Rohr 1 bzw. am Schwinger erzeugt, und zwar durch einen an einem Schenkel 2 angebrachten Magnet 4, der mit einer ihm gegenüber liegenden Spule 5 wechselwirkt. Eine zweite Kombination von Spule 6 und Magnet 7 ist für die Abnahme bzw. Detektion der ausgebildeten Schwingung der dem anderen Schenkel 3 des U-förmig gebogenen Rohres 1 angeordnet.

Die eingesetzten Elemente werden so angebracht, dass sie nicht in einem Knotenpunkt der untersuchten Eigenschwingungen des Rohres 1 bzw. Schwingers liegen, können aber auch beispielsweise nahe der Einspannstelle 8 der Schenkel 2, 3 oder auch örtlich getrennt an unterschiedlichen Längspositionen des Schwingers liegen.

Die Anregung des Schwingers zu Schwingungen erfolgt mittels eines, bevorzugt digitalen, Erregerverstärkers einer Steuer - und Auswerteelektronik 9, der in einem Regelkreis mit dem Abnahmesignal z.B. auf die maximale Amplitude und damit auf die Eigenschwingung des Biegeschwingers regelt. Die Steuer - und Auswerteelektronik 9 misst die jeweiligen Schwingungsparameter, nämlich Periodendauer P, Amplitude und/oder Frequenz und/oder Phasenwinkel zwischen Anregungs- und Abnahmesignal und/oder einen anderen, für die Güte des Schwingers bzw. für die Dämpfung des Systems repräsentativen Schwingungsparameter. Auch die Signalauswertung erfolgt in der Auswerteelektronik, die auch die erforderlichen Justier- bzw. Kalibriertabellen enthält und die erforderlichen Rahmenschritte vornimmt.

Die Auslenkungen, die ein derartiger Schwinger, im einfachsten Modell repräsentiert durch einen Stab, aus der Ebene, die durch die beiden Schenkel 2, 3 gebildet wird, erfahren kann, sind in Fig. 2 schematisch dargestellt. Die Grundwelle O entspricht der Auslenkung des U-förmig gebogenen Endes des Rohres 1 bzw. schwingenden Stabs aus der Ebene. Die erste Oberwelle I zeigt zusätzlich zum Einspannpunkt einen Schwingungsknoten ungefähr bei 2/3 der Gesamtlänge des Schwingers. Die zweite und dritte Oberwelle II, III besitzen zwei bzw. drei Schwingungsknoten in der Ebene. Fig. 2 zeigt somit die Schwingungsmoden eines Y-Schwingers bei Auslenkung senkrecht zur Ebene, die durch die beiden Schenkel 2, 3 des Schwingers bestimmt wird. Die x-Achsen entsprechen jeweils der Linie AA in der Zeichenebene, die durch die beiden Schenkel 2, 3 bestimmt ist, die Auslenkung erfolgt senkrecht dazu in y-Richtung.

Die Vorteile der Biegeschwinger-Methode sind gegenüber anderen Messmethoden zur Ermittlung des spezifischen Gewichts bzw. der Dichte vielfältig. Neben geringen Probenmengen können die Schwinger mittels Heizelementen 10 und Isolierungen 11 extrem genau temperiert werden. Die Justierung bzw. Kalibrierung der Schwinger und deren Überprüfung kann einfach z.B. mit Wasser und/oder Dichtestandards bzw. Standardfluiden erfolgen.

Da die Dichte zumeist stark temperaturabhängig ist, werden die zu untersuchenden Proben vorzugsweise direkt im Schwinger mit einem eingebauten Thermostat temperiert.

Bei einer angenommenen bzw. vorgegebenen, konstant gehaltenen Temperatur wird zur Berechnung der Dichte aus der Schwingungsdauer ein Hohlkörper der Masse m betrachtet, der elastisch an einer Feder mit der Federrate R aufgehängt ist. Sein Volumen V sei mit einem Fluid der Dichte $\rho$ gefüllt.

Für die Periodendauer P dieses Systems in der Grundschwingung gilt:

$$P = 2\pi \sqrt{\frac{(m + \rho V)}{R}}$$

Daraus ergibt sich durch Umformen für die Dichte:

$$\rho = P^2 \frac{R}{4\pi^2 V} - \frac{m}{V} = A\, P^2 - B$$

mit den Justier- bzw. Kalibrierkonstanten A und B. Diese enthalten die Federrate R des Schwingers, dessen Leermasse und das Volumen des Fluids, welches an der Schwingung teilnimmt. A und B sind also Apparatekonstanten bzw. Justierwerte eines individuellen Schwingers. Sie können aus zwei Messungen der Schwingungsdauer des Schwingers, gefüllt mit Fluiden bekannter unterschiedlicher Dichte (im Normalfall Luft und Wasser oder spezielle Kalibrierstandards) ermittelt werden. Die Konstanten A und B sind allerdings viskositätsabhängig.

Die für den Schwinger charakteristischen Frequenzen hängen vom Material des Schwingers und von der Geometrie des Schwingers ab, insbesondere vom Durchmesser des U-Rohres 1, der Länge der Schenkel 2, 3, dem Biegeradius und damit auch dem Abstand der beiden Schenkel 2, 3 zueinander.

Ein realer Metall-Schwinger besitzt beispielsweise eine Länge von 10 cm bei einem Abstand zwischen den Schenkeln von 1 cm und einem Durchmesser des Rohres von 3 mm für eine Hochdruck- und Hochtemperaturanwendung. Damit ergeben sich als Frequenz der Grundschwingung etwa 400 Hz.

Die Dichtemessung mit einem Biegeschwinger wird relativ stark von der Viskosität $\eta$ des zu messenden Fluids beeinflusst. Der dadurch bedingte Fehler beträgt bei bekannten Schwingern, z.B. einem Metallschwinger mit Eigenfrequenzen der Grundwelle im Bereich von 400 Hz, bis zu 0.0015 g/cm$^3$, was bei einer angestrebten Genauigkeit von 0.0001g/cm$^3$ ein massives Problem darstellt. Es gibt unterschiedliche Verfahren, die über Zusatzinformationen aus der Schwingungsmessung in der ersten Oberwelle eine Viskositätskorrektur errechnen. Diese Verfahren sind jedoch nicht immer anwendbar, insbesondere wenn aus technischen Gründen die erste Oberschwingung schlecht erregbar ist oder die Erregerspule in einem Schwingungsknoten liegt. Des Weiteren haben diese Verfahren den Nachteil, dass das aus der ersten Oberschwingung gewonnene Signal schon im interessierenden Viskositätsbereich zweideutig ist, da der Zusammenhang zwischen dem Oberwellensignal und der Viskosität einen stark gekrümmten Verlauf hat und ein Maximum durchläuft um danach wieder abzufallen.

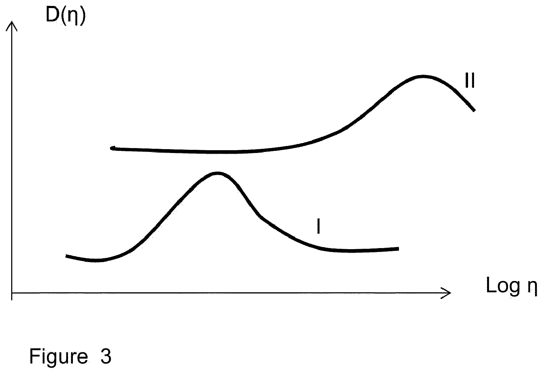

Figur 3 ist der prinzipielle Zusammenhang zwischen der Dämpfung D$\eta$ des Schwingers und der Viskosität $\eta$ des zu vermessenen Fluids zu entnehmen. Typische Dämpfungskurven I, II steigen für kleine Viskositäten stark an, durchlaufen ein Maximum und nehmen dann zu größeren Viskositäten hin wieder ab. Dabei gilt, dass die Dämpfung umso größer wird, je höher die Anregungsfrequenz der Eigenschwingung ist.

Dieser Zusammenhang wird z.B. in der AT 409551 zur Viskositätskorrektur verwendet. Dabei wird anhand der Dämpfung in der ersten Oberschwingung entschieden, in welchem Bereich der ermittelten Kurve der Grundschwingung die Viskosität liegen muss und daraus wird das Korrekturmodell bestimmt. Man ermittelt also aus dem Dämpfungsverhalten zweier Schwingungen, d.h. der Schwingung 0-ter Ordnung, also der Grundschwingung, und der der ersten Oberschwingung eine Korrektur und berechnet mit der gewonnenen Viskosität mit zwei unterschiedlichen Funktionen, - nach der Feststellung aus der Dämpfung höherer Ordnung, in welchem Bereich der Kurve man sich befindet - die Korrektur des Dichtewertes. Es wird dabei vorgeschlagen, aus Gründen der Genauigkeit die Grundschwingung für die Korrektur zu verwenden.

Betrachtet man das Dämpfungsverhalten des Schwingers, so durchläuft die Dämpfungskurve beim Übergang zu höheren Viskositäten ein Maximum, um dann wieder abzusinken. Für höhere Schwingungsordnungen verschiebt sich dieses Maximum gegen höhere Viskositäten.

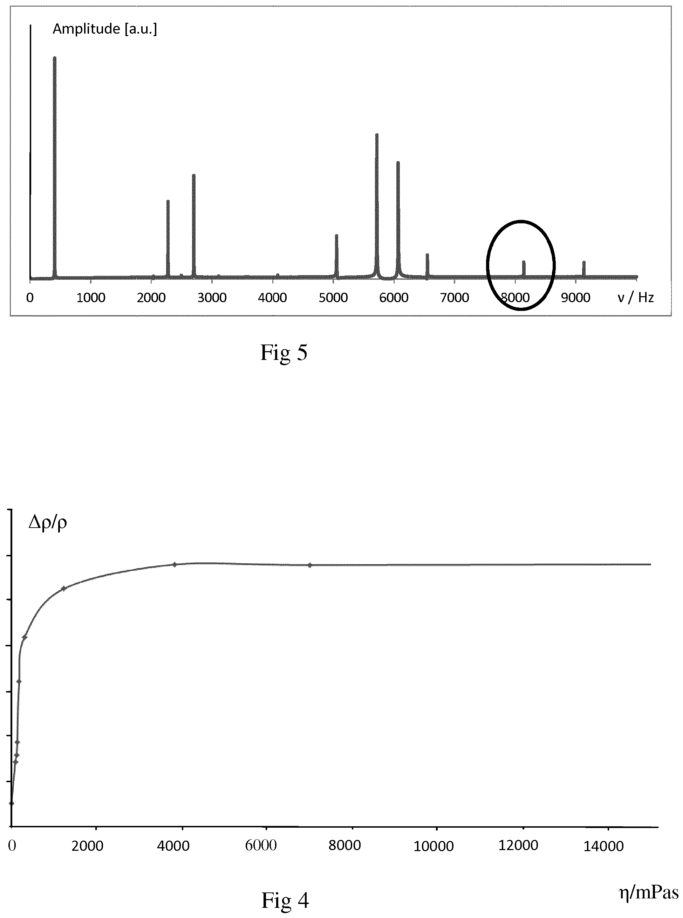

Die unterschiedlichen Schwingungsparameter haben natürlich auch Einfluss auf die Dichtemessung. In der obigen Gleichung zur Bestimmung der Dichte aus der Periodendauer entspricht die unterschiedliche Dämpfung aufgrund unterschiedlicher Viskositäten einer geänderten Federkonstante R. Für den relativen Dichtefehler $\Delta\rho/\rho$ als Funktion der Viskosität ergibt sich der in Fig. 4 dargestellte Zusammenhang. Im Bereich niedriger Viskositäten nimmt der relative Fehler der Dichte $\Delta\rho/\rho$ zu höheren Viskositäten n hin zu und geht dann im Bereich von etwa 700 mPas in einen Sättigungswert über, ab diesen Viskositätswerten bleibt der Dichtefehler annähernd konstant.

Um die Nachteile der bekannten Messverfahren zu vermeiden, insbesondere den erforderlichen Aufwand für Korrekturverfahren zu verringern und die Genauigkeit der erhaltenen Messwerte zu erhöhen, wird erfindungsgemäß die Vorgangsweise gemäß dem Kennzeichen des Anspruches 1 vorgeschlagen und eine Schwingungsmode höherer Ordnung zur Dichtekorrektur herangezogen, die über den interessierenden Bereich einen eindeutigen Kurvenverlauf zeigt. Es ist somit vorgesehen, dass für die Ermittlung eines Dämpfungsparameters oder Viskositätswertes des zu untersuchenden Fluids der Biegeschwinger zur resonanten Schwingung auf der zweiten oder einer höheren Oberschwingung angeregt und bei dieser resonanten Schwingung der Dämpfungsparameter des Biegeschwingers für das zu untersuchende Fluid oder der diesem Dämpfungsparameter in einer zweiten, bereitgestellten Justiertabelle zugeordnete Viskositätswert für das zu untersuchende Fluid ermittelt wird und mit dem gemessenen Dämpfungsparameter oder dem erhaltenen Viskositätswert eine Korrektur hinsichtlich der Viskosität des bei der Vermessung des zu untersuchenden Fluids bei der resonanten Eigenschwingung erhaltenen Dichtewertes vorgenommen wird.

Zur Korrektur des viskositätsbedingten Dichtefehlers $\Delta\rho/\rho$ wird also die Messung von Dämpfungsparametern der zweiten Oberschwingung oder einer Schwingung noch höherer Ordnung herangezogen. Die Messung eines zweiten Gütefaktors und/oder die Ermittlung zweier Korrekturfunktionen ist damit nicht mehr nötig.

Der wesentliche Vorteil der Erfindung liegt darin, dass der Bereich der Zweideutigkeit aufgrund hoher Scherraten bei der schnellen Schwingung bereits in der zweiten Oberwelle zu hohen Viskositäten hin verschoben ist und es somit möglich ist, bis zu Viskositätswerten von ca. 30.000 mPas eine einzige zur Korrektur nutzbare Viskositätsinformation zu erhalten. Damit entfällt eine Untersuchung von zwei oder mehr Oberschwingungen und die Auswertung und Korrektur kann rascher erfolgen.

Diese möglichen höheren Moden werden im realen Schwinger beispielsweise durch die Präsenz der Magnete sehr häufig Mischformen sein, zumeist enthalten die tatsächlichen Schwingungen neben der Auslenkung in y-Richtung auch andere Schwingungsanteile. Simuliert man die Querschnitte und Massen mit einem Schwinger, so kann man die Schwingungsmoden mit ausreichender Genauigkeit identifizieren.

Für das erfindungsgemäße Verfahren reicht das sichere Auffinden einer bestimmten Schwingungsmode aus, die im interessierenden Viskositätsbereich eindeutig ist. Im einfachsten Fall kann dies über einen Frequenzscan über den Bereich der höheren Frequenzen erfolgen.

Untersucht man einen Biegeschwinger in seinem Frequenzverhalten über einen weiten Frequenzbereich hinsichtlich seiner Schwingungsamplituden so erhält man typischerweise einen in Fig. 5 dargestellten Verlauf der Auslenkungsamplituden in den unterschiedlichen Schwingungsmoden. Fig. 5 zeigt einen Frequenzscan eines in Fig. 1 beschriebenen Schwingers der Anmelderin im Bereich von 0 bis 10 kHz. Im Bereich um 400 Hz liegt die für die Dichtemessung mit maximaler Amplitude verwendete Grundschwingung. Es folgen weitere resonante Frequenzen mit gut messbaren Amplituden, die einer Auslenkung des Schwingers aus der Ebene entsprechen und Mischanregungen. Speziell gekennzeichnet ist in dieser Figur die Amplitude der zur Viskositätskorrektur verwendeten zweiten Oberschwingung bei etwa 8150 Hz. Zwischen der Grundschwingung und dieser zweiten Oberschwingung liegen verschiedene Schwingungsmoden der ersten und zweiten Oberschwingung bzw. weitere Resonanzamplituden. Diese entsprechen zusätzlichen Schwingungsmoden, die im realen fluidgefüllten Biegeschwinger in Resonanz senkrecht zur Ebene durch die Schenkel auftreten können

Für das erfindungsgemäße Verfahren wird eine dieser höheren Schwingungsmoden, bevorzugt eine Mode der zweiten Oberschwingung mit gut messbarer Amplitude gewählt, und hinsichtlich ihres Dämpfungsverhaltens untersucht. Die Abhängigkeit dieses Parameters von der Viskosität wird mit Fluiden unterschiedlicher Viskosität gemessen und in einer Justier- bzw. Kalibriertabelle/Justier- bzw. Kalibrierfunktion hinterlegt. Bei der tatsächlichen Messung an einem zu untersuchenden Fluid wird die Viskosität des gefüllten Fluids aus dieser Justier- bzw. Kalibriertabelle bestimmt und zur Korrektur des Dichtemesswertes herangezogen.

Im Frequenzbereich der hier verwendeten Mode der zweiten Oberschwingung wird erfindungsgemäß ein für die Dämpfung des Schwingers charakteristischer Parameter untersucht. Neben der Amplitude dieser Schwingung ist dies beispielsweise der Phasenwinkel $\delta$ zwischen der Anregung und der erregten Schwingung.

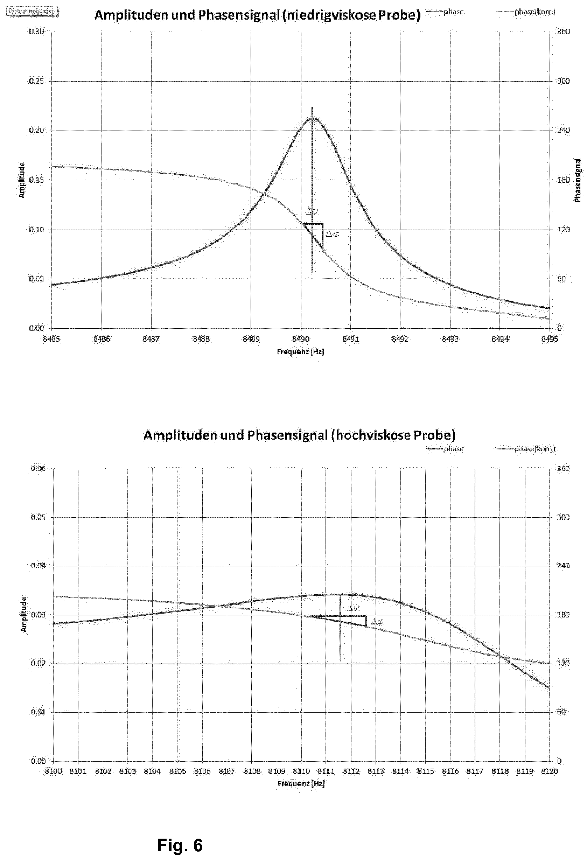

Besonders vorteilhaft für die Ermittlung der Viskosität ist es, wenn als Dämpfungsparameter die Amplitude der Schwingung und/oder der Phasenwinkel zwischen der Anregung und Abnahme der Schwingung gemessen und ausgewertet werden. Fig. 6 zeigt den Zusammenhang zwischen der Amplitude des Schwingers und dem Phasenwinkel $\delta$ zwischen der Anregung des Schwingers und der Abnahme des Signals aufgetragen über die Frequenz der Anregung für zwei unterschiedliche Viskosität besitzende Fluide. Fig. 6 zeigt oben den Signalverlauf für niedrigviskose Proben und unten für hochviskose Proben mit starker Dämpfung. Die Messung der Signale erfolgt durch einen Frequenzscan über den in Frage kommenden Bereich in ausreichend kleinen Schritten. Der für die Dämpfung maßgebliche Parameter wird hier durch Ermittlung der Steigung des Phasensignals am Ort der Abnahmespule ermittelt. Durch Messung der Phasenwinkel für unterschiedliche Frequenzen wird die Steigung des Phasensignals rund um die Lage des Amplitudenpeaks gemessen.

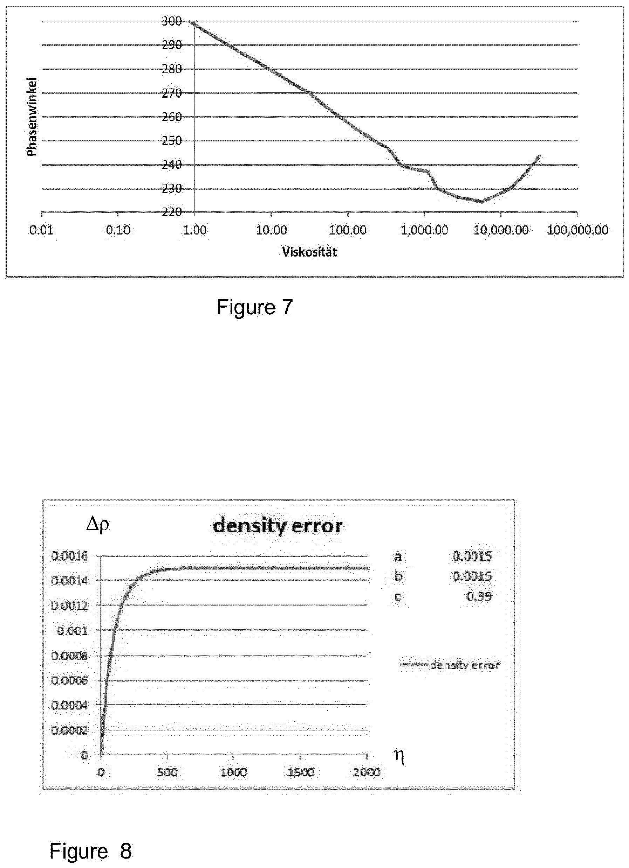

Trägt man die für die einzelnen Frequenzen jeweils ermittelten Steigungswerte k gegen die Viskosität auf, so erhält man den in Fig. 7 dargestellten Zusammenhang, wobei der Phasenwinkel als Funktion von 10Log (Viskosität) dargestellt ist. Im Bereich höherer Viskositäten, hier zwischen 5000 mPas und ca. 30.000mPas, ist die Funktion zwar nicht mehr eindeutig, aber trotzdem uneingeschränkt zur Korrektur verwendbar, da der Viskositätsfehler der Dichtemessung bei hohen Viskositäten einen konstanten Wert annimmt, wie aus Fig. 4 ersichtlich ist.

Alternativ ist es möglich, dass als Dämpfungsparameter das Abklingverhalten des Schwingers herangezogen wird. Dazu wird die Erregung der erzwungenen Schwingung mit dem Erregerverstärker kurz unterbrochen and beispielsweise die Amplitude des Schwingers bis zu ihrem Abfall auf einen bestimmten Prozentsatz der ursprünglichen maximalen Amplitude untersucht.

Für eine optimale Korrektur der Dichtemessung benötigt man insbesondere im Bereich bis 500 mPas eine möglichst genaue Information über den Wert der Viskosität. Im Bereich über 1000 mPas genügt die Information, dass die Viskosität größer als 1000 mPas ist. Im Bereich bis 5000 mPas könnte der mit der Dämpfung der zweiten Oberwelle ermittelte Wert für die dynamische Viskosität aus der zuvor hinterlegten Justiertabelle auch zur Anzeige gebracht werden, wenngleich die damit erreichte Genauigkeit nicht vergleichbar ist mit der eines Viskosimeters.

Da für die Korrektur der Dichtemessung auf 10-4 g/cm$^3$ die Ermittlung der tatsächlichen Viskosität auf 5% Messfehler genügt, kann die Ermittlung des Dämpfungsparameters und/oder Viskositätswertes bereits vor Erreichen der tatsächlichen Messtemperatur durchgeführt werden. Um das sichere Erreichen stabiler Temperaturverhältnisse im Schwinger sicherzustellen, erfolgen beispielsweise für die Dichtebestimmungen mehrere Messungen der Periodendauer der für die Dichtebestimmung verwendeten Eigenschwingung, die innerhalb einer Genauigkeitsklasse reproduzierbar sein müssen und erst bei Unterschreitung einer vorgegebenen Schranke angezeigt werden. Die Dichtemessung kann also mehrfach durchgeführt und die erhaltenen Werte können verglichen bzw. gemittelt werden. Um die Messung zu beschleunigen, ist es möglich, die Bestimmung des Dämpfungsparameters und / oder Viskositätswertes durchzuführen, wenn die Messgenauigkeit und/oder ein vorgegebenes Kriterium für die Dichte annähernd erreicht ist. Die gewünschte Oberschwingung wird vorab angeregt und die Viskosität bestimmt, damit wird Messzeit eingespart.

Der Fehler der Dichtemessung mit dem Biegeschwinger ist viskositätsabhängig und kann durch eine Vermessung von Justier- bzw. Kalibrierstandards ermittelt werden. Für die Korrektur des Fehlers ergeben sich erfindungsgemäß mehrere Durchführungsmöglichkeiten:

In der einfachsten Variante wird mit mehreren Viskositätsstandard durch Messung des Dämpfungsparameters eine Kalibrieretabelle erstellt, die einzelnen Dämpfungsparamtern Viskositätswerte zuordnet und diese werden für die Dichtekorrektur herangezogen. Es ist dabei vorteilhaft, wenn der Biegeschwinger bei der zweiten oder einer höheren Oberschwingung zur Resonanz angeregt wird und eine weitere Justiertabelle angelegt wird, in der der Zusammenhang zwischen der für die Viskosität und dem sich bei dieser Oberschwingung ergebenden Messfehler $\Delta(\rho)$ der Dichte für eine Anzahl von Standardfluiden festgelegt und bereitgestellt wird und der der jeweiligen gemessenen Viskosität in der weiteren Justiertabelle zugeordnete Messfehler $\Delta(\rho)$ zur Korrektur des bei der Eigenschwingung, insbesondere Grundschwingung, für das zu untersuchende Fluid ermittelten Dichtewertes herangezogen wird.

Dabei wird in der weiteren Justier- bzw. Kalibriertabelle für jeden Viskositätswert die entsprechende Korrektur des Dichtewertes $\Delta\rho/\rho$ bzw. ein Dichtefehler $\Delta\rho$ zur Verfügung gestellt.

In einer weiteren Ausgestaltung der Erfindung kann der Verlauf des viskositätsabhängigen Dichtefehlers gemäß Fig. 4 durch eine vorgegebene Funktion beschrieben werden. Fig. 8 zeigt eine derartige Näherung des Dichtefehlers durch die Funktion

$$y = a - bc^x$$

Diese Funktion hat den Vorteil, dass ihre drei Parameter den Verlauf für den vorgesehenen Zweck sehr anschaulich beschreiben:

Der Parameter a beschreibt die Höhe des asymptotischen Grenzwertes, gegen den die Funktion läuft.

Der Parameter b definiert den Nulldurchgang; bei b = a geht die Funktion durch den Nullpunkt.

Der Parameter c beschreibt den Verlauf zwischen dem Nullpunkt und dem Grenzwert.

Ein weiterer Vorteil liegt darin, dass der gesamte Viskositätsbereich mit einer einzigen Funktion beschrieben werden kann und daher die eingangs beschriebene Unstetigkeit der Korrekturfunktion wegfällt. In der Fig. 8 ist der Zusammenhang des Dichtefehlers und der Viskosität für einen Schwinger mit den ermittelten Größen a = 0,0015, b = 0,0015 und c = 0.99 dargestellt.

Hat man also aus der Messung eines Dämpfungsparameters, z.B. des Phasenwinkels, der zweiten Oberwelle die Viskosität ermittelt, so kann man über die Dichtekorrekturfunktion den Messfehler ermitteln, um den man den Messwert für eine richtige Messwertanzeige korrigieren muss. Erfindungsgemäß ist somit vorgesehen, dass dazu der Zusammenhang zwischen dem für die Oberschwingung ermittelten Viskositätswert und dem Dichtefehler $\Delta(\rho)$, insbesondere dem auf den bei der Eigenschwingung, insbesondere Grundschwingung, ermittelten Dichtewert normierten Dichtefehler, mit einer Funktion angenähert wird, welche als Zusammenhang zwischen dem Messwert der Viskosität und dem Dichtefehler $\Delta(\rho)$ bei der zweiten oder höheren Oberschwingung angesehen und in die weitere Justiertabelle eingetragen wird.

Alternativ sind natürlich auch andere Funktionen möglich, die das messbare Verhalten genauer modellieren. Die oben beschriebene Funktion modelliert zwar über weite Bereiche die Kurve der relativen Viskositätsabweichung für die vierte Dezimalstelle *(?)* hinreichend genau. Dem Fachmann ist klar, dass der tatsächliche Kurvenverlauf aus Bereichen unterschiedlicher Steigung und Übergang in die Sättigung genauer mittels komplexerer Funktionen modellierbar ist.

Es kann ferner vorgesehen sein, dass der Zusammenhang zwischen dem für die Oberschwingung ermittelten Viskositätswert und dem Dichtefehler $\Delta(\rho)$, insbesondere zu dem bei der Eigenschwingung, insbesondere Grundschwingung, ermittelten Dichtewert direkt in die erste Justiertabelle eingetragen und für die Erstellung des Zusammenhanges zwischen Dichte und Periodendauer angewandt bzw. zur Verfügung gestellt wird und die viskositätsabhängigen Justierwerte A(n) und B(n) für die Berechnung einer korrigierten Dichte viskositätsabhängig erstellt und in der ersten Justiertabelle zur Verfügung gestellt werden. Damit kann die Viskositätsabhängigkeit der Federkonstante R, die den Schwinger in Gleichung repräsentiert, direkt über die Justier- bzw. Kalibrierparameter A und B zur Dichtebestimmung berücksichtigt werden. Bei dieser erfindungsgemäßen Vorgangsweise erfolgt vorteilhafterweise vorab eine

-   Messung der Justierfunktionen A(n), B(n) für die Dichtebestimmung des zu untersuchenden Fluids mit dem Biegeschwinger mit Kalibrierfluiden, das sind Dichtestandards bzw. Fluide unterschiedlicher Viskosität, und die

Erstellung einer Justier- bzw. Kalibriertabelle mit Viskositätsstandards zur Bestimmung des Zusammenhangs der Viskosität und der Dämpfung D = D(n) für die zweite oder eine höhere Oberschwingung.

Berechnet man für den ungefüllten Biegeschwinger mit dem Modell eines Glasstabes die Lage der Frequenzen der Oberwellen, so ergeben sich beim Y-Schwinger/Stabmodell folgende Frequenzverhältnisse:

$$\omega_3/\omega_0 = 34.39, \quad \omega_2/\omega_0 = 17{,}56, \quad \omega_1/\omega_0 = 6{,}27$$

Diese Werte gelten für eine einfache Modellrechnung mit einer Erregung am Einspannpunkt und einem Stab ohne Störmasse.

Im realen Schwinger verschieben Störmassen wie die für die Anregung und Messung aufgeklebten Magnete und die im Metallschwinger mit dickerer Wandstärke herrschenden Massen diese Verhältnisse, die jeweiligen Moden sind daher stark vom verwendeten Schwinger abhängig.

Diese tatsächliche Lage müsste allerdings für jedes Schwingungssystem separat untersucht werden.

Allerdings ändern sich für unterschiedliche Füllungen diese Verhältnisse nicht wesentlich, man kann also aus Periodendauer der Grundwelle die Lage der Oberwellen aus dem einmal bestimmten bzw. gemessenen Verhältnis ableiten.

In Fig. 6 ist die geringe Verschiebung der Maxima der Amplituden zu sehen. Besonders für hohe Viskositäten ist die Lage des Maximas nur mehr schwer aufzufinden. Legt man der Messung dieses Verhältnis V, d.h. ein Verhältnis zwischen der Frequenz der Grundschwingung und der Frequenz der zweiten Oberschwingung, zugrunde, dann kann die jeweilige separate Bestimmung der Lage der zweiten Oberschwingung durch einen Frequenzscan entfallen und die Messung bei Auswertung der Bestimmung wird beschleunigt. Es ist somit vorteilhaft, wenn zur Bestimmung der Lage der zweiten oder der höheren Oberschwingung der Abstand der Frequenzen zwischen der Eigenschwingung, insbesondere Grundschwingung, und der jeweiligen Oberschwingung bestimmt und zur Anregung der Oberschwingung herangezogen wird und gegebenenfalls dazu ein Faktor bzw. Verhältnis V bestimmt wird, der bzw. das die Lage der Oberschwingung als Vielfaches der Frequenz der Eigenschwingung angibt.

Zur technischen Realisierung des Verfahrens können nahezu alle Biegeschwinger herkömmlicher Bauart, insbesondere auch für den Einsatz in Umgebungsbedingungen mit hohen Drücken und Temperaturen geeignete Metallschwinger der Anmelderin eingesetzt werden.

Aufgrund der Abnahme der Schwingungsamplituden für Oberschwingungen sind der praktischen Verwendung höherer Ordnungen als der zweiten Ordnung gewisse Grenzen gesetzt. Die Anregung der zweiten und einer höheren Oberschwingung erfolgt mit der Steuerelektronik der Steuer- bzw. Auswerteinheit, der die Messwerte zugeführt sind und die die Schwingungen einregelt oder alternativ durch einen Frequenzscan..

Aufgrund der nur mehr relativ kleinen Amplituden im Bereich der zweiten und höheren Oberschwingung und der in schwierigen Umgebungen bestimmender werdenden Störmoden ist mitunter die zweite Oberwelle über einen Frequenzscan nicht ganz einfach zu bestimmen und zu erkennen. Dies trifft vor allem im Falle hoher Viskositäten mit hoher Dämpfung der Amplitude zu Höhere Schwingungsmoden werden im Regelfall über einen Frequenzscan im realen Messumfeld nicht mehr rasch direkt ansprechbar sein.

Um hier die Genauigkeit der Messung zu steigern und die Messung zu beschleunigen wird der Abstand zwischen der Eigenfrequenz der Grundwelle und der interessierenden Oberschwingung im Zuge der Kalibrierung erfasst und der Faktor V bestimmt, der die Lage der interessierenden Oberschwingung als Vielfaches der Grundwellenfrequenz vorgibt. Bei der tatsächlichen Messung wird dann gezielt nur mehr der Dämpfungsparameter, z.B. der Phasenwinkel zwischen der Anregung und dem Abnahmesignal bei der erwarteten bzw. vorgegebenen Frequenz der Oberschwingung, bestimmt und aus diesen Messwerten direkt die Viskosität aus der zweiten Kalibriertabelle ausgelesen.

Ferner wird in einer weiteren Kalibriertabelle für jeden Viskositätswert die entsprechende Korrektur des Dichtewertes $\Delta\rho/\rho$ bzw. ein Dichtefehler $\Delta\rho$ zur Verfügung gestellt.

Die erfindungsgemäße Vorgangsweise sieht für die Praxis vor:

Messung der Periode der Grundschwingung des mit dem zu untersuchenden Fluid gefüllten Schwingers,

- Anregung der zweiten Oberwelle,

- Messung eines für die Dämpfung charakteristischen Parameters D, vorzugsweise der Güte oder der Amplitude der Oberschwingung oder des Phasenwinkels $\delta$ der Oberschwingung,

- Ermittlung der Viskosität aus der zweiten Justier- bzw. Kalibriertabelle für den ermittelten Dämpfungsparameter D = D($\eta$)

- Berechnung der viskositätskorrigierten Dichte $\rho$ direkt aus der gemessenen Periodendauer der Grundschwingung direkt mit dem zum ermittelten Viskositätswert passenden Funktionswerten A(n), B($\eta$), und Ausgabe der Dichte und der Anzeige der Viskosität für $\eta \leq 5000$ mPas

Bei der Durchführung eines Frequenzscans wird vorteilhafterweise die Periodendauer in der Grundwelle gemessen und die Lage der zweiten Oberwelle festgelegt.

Der Schwinger wird mit dem zu untersuchenden Fluid gefüllt, gegebenenfalls wird eine konstante Temperatur $T_{mess}$ eingeregelt und gemessen, und dann wird der Schwinger zur Schwingung angeregt.

Der Scan startet mit einer Startfrequenz von z.B. 100Hz, bevorzugt aber bei einer höheren Startfrequenz von z.B. 8000 Hz und das Scannen erfolgt über den Scanbereich z.B. bis 9kHz als Endfrequenz mit einer wählbaren Schrittweite von z.B. einigen Herz. Dabei werden die Frequenz bzw. die Periodendauer der Schwingung und die Amplitude des Phasenwinkelsignals jeweils abgefragt und gegebenenfalls mit der Temperatur und der Frequenz gespeichert, wobei insbesondere gilt:

$$\text{Frequenz Grundschwingung[Hz]} = \frac{10^6}{P[\mu s]}, \text{ wobei P die Periodendauer ist}$$

Ein Messprogramm kann die tatsächliche Lage der einzelnen Peaks der Amplitude mittels einer rollierenden Steigungsberechnung ermitteln. Am Ort des Amplitudenmaximums wird die Steigung des Phasenwinkelsignals ermittelt, diese kann als Maß für die Dämpfung verwendet werden. Die Lage der zweiten Oberschwingung kann als Faktor bzw. als Vielfaches V der Grundschwingung ausgedrückt bzw. ermittelt werden. Dazu wird beispielsweise der leere Schwinger bzw. der mit Luft gefüllte Schwinger bei der bevorzugten Messtemperatur (z.B. 20 Grad C) sowohl in der resonanten Grundschwingung als auch in der zweiten Oberschwingung angeregt.

Daraus wird dann der Faktor V bestimmt:

$$V = \frac{\text{Frequenzlage des Phasenwinkelpeaks}}{\text{Frequenz der Grundschwingung}} = \text{const.}$$

Zur Erhöhung der Genauigkeit kann gegebenenfalls der Faktor V = V(p, T) ermittelt werden. Durch die Aufnahme einer Kalibrierfunktion bzw. Anlegen einer Tabelle mittels unterschiedlicher Messfluide oder Standardfluiden bei unterschiedlichen Temperaturen kann dieser Faktor V = (pT) in einer Justier- bzw. Kalibriertabelle oder Justierfunktionbereitgestellt werden. Dazu ist erfindungsgemäß vorgesehen, dass zur Bestimmung der Lage der zweiten oder der höheren Oberschwingung der Abstand der Frequenzen zwischen der Eigenschwingung, insbesondere Grundschwingung, und der jeweiligen Oberschwingung anhand von Standards als eine von der Dichte und der Temperatur abhängige Funktion V bestimmt wird und mit den Standards eine Justiertabelle und/oder Justierfunktion erstellt und bereitgestellt und zur Anregung der Oberschwingung herangezogen wird. *(?)*

Zur Viskositätsjustierung kann mit unterschiedlichen Justierstandards bzw. -fluiden, insbesondere zumindest drei Fluiden mit unterschiedlichen Viskositäten, die Grundschwingung mit der Verstärkerelektronik eingeregelt werden. Die Periodendauer bzw. Frequenz werden gemessen. Mit einer Startfrequenz = Frequenz Grundschwingung * V - $\Delta$V und einer Schrittweite von bevorzugt 0,5 Hz wird die zweite Oberschwingung angeregt, wobei jeweils das Phasen und/oder Amplitudensignal ermittelt wird.

Aus den Wertepaaren (X,Y), wobei X die Winkelamplitude und Y = log10 die Viskosität darstellt, der drei Fluide wird beispielsweise eine lineare Regression gerechnet. Als Ergebnis erhält man eine Justiergerade mit Steigung b und Achsenabschnitt a, die den Zusammenhang zwischen den gemessenem Winkel auf der X-Achse und der Viskosität auf der y-Achse beschreibt:

$$b = \frac{n \sum xy - (\sum x)(\sum y)}{n \sum x^2 - (\sum x)^2}$$

mit x: Mittelwert aller x-Werte und Y: Mittelwert aller y-Werte

Berechnung des Achsenabschnitts a: $\alpha = Y - bX$

Damit erhält man die Justierkonstanten a($\eta$), b($\eta$) der Viskositätsjustierung.

Um keine Messzeit zu verlieren, erfolgt die Viskositätsmessung während des Temperaturangleichs, was bei geeigneter Wahl der Spezifikation der Dichtemessgenauigkeit möglich ist.

Vorteil: durch die Verwendung der hochfrequenten zweiten Oberwelle ist das der funktionelle Zusammenhang zwischen Phasensignal und Viskosität über einen weiten Bereich, insbesondere für Newton'sche Flüssigkeiten, eindeutig.

**Patentansprüche**

1.  Verfahren zur Ermittlung eines korrigierten Wertes für die viskositätsabhängige Dichte eines zu untersuchenden Fluids mit einem Biegeschwinger, wobei

    - eine erste Justiertabelle betreffend den Zusammenhang zwischen der Dichte von Standardfluiden und der Periodendauer des Biegeschwingers für eine resonante Eigenschwingung, bevorzugt die Grundschwingung, bereitgestellt wird, und
    - der Biegeschwinger zu dieser resonanten Eigenschwingung angeregt wird und bei dieser Eigenschwingung die Periodendauer des Biegeschwingers für das zu untersuchende Fluid und über die Periodendauer aus der Justiertabelle der zugeordnete Dichtewert für das zu untersuchende Fluid ermittelt wird **dadurch gekennzeichnet, dass**

    - für die Ermittlung eines Dämpfungsparameters oder Viskositätswertes des zu untersuchenden Fluids der Biegeschwinger zur resonanten Schwingung auf der zweiten oder einer höheren Oberschwingung angeregt und bei dieser resonanten Schwingung der Dämpfungsparameter des Biegeschwingers für das zu untersuchende Fluid oder der diesem Dämpfungsparameter in einer zweiten, bereitgestellten Justiertabelle zugeordnete Viskositätswert für das zu untersuchende Fluid ermittelt wird, und
    - mit dem gemessenen Dämpfungsparameter oder dem erhaltenen Viskositätswert eine Korrektur hinsichtlich der Viskosität des bei der Vermessung des zu untersuchenden Fluids bei der resonanten Eigenschwingung erhaltenen Dichtewertes vorgenommen wird.

2.  Verfahren nach Anspruch 1, **dadurch gekennzeichnet, dass** der Biegeschwinger bei der zweiten oder einer höheren Oberschwingung zur Resonanz angeregt wird und eine weitere Justiertabelle angelegt wird, in der der Zusammenhang zwischen der für die Viskosität und dem sich bei dieser Oberschwingung ergebenden Messfehler $\Delta(\rho)$ der Dichte für eine Anzahl von Standardfluiden festgelegt und bereitgestellt wird und der der jeweiligen gemessenen Viskosität in der weiteren Justiertabelle zugeordnete Messfehler $\Delta(\rho)$ zur Korrektur des bei der Eigenschwingung, insbesondere Grundschwingung, für das zu untersuchende Fluid ermittelten Dichtewertes herangezogen wird.

3. Verfahren nach Anspruch 1 oder 2, **dadurch gekennzeichnet, dass** zur Bestimmung der Lage der zweiten oder der höheren Oberschwingung der Abstand der Frequenzen zwischen der Eigenschwingung, insbesondere Grundschwingung, und der jeweiligen Oberschwingung bestimmt und zur Anregung der Oberschwingung herangezogen wird und gegebenenfalls dazu ein Faktor bzw. Verhältnis V bestimmt wird, der bzw. das die Lage der Oberschwingung als Vielfaches der Frequenz der Eigenschwingung angibt.

4. Verfahren nach einem der Ansprüche 1 bis 3, **dadurch gekennzeichnet, dass** der Zusammenhang zwischen dem für die Oberschwingung ermittelten Viskositätswert und dem Dichtefehler $\Delta(\rho)$, insbesondere dem auf den bei der Eigenschwingung, insbesondere Grundschwingung, ermittelten Dichtewert normierten Dichtefehler, mit einer Funktion angenähert wird, welche als Zusammenhang zwischen dem Messwert der Viskosität und dem Dichtefehler $\Delta(\rho)$ bei der zweiten oder höheren Oberschwingung angesehen und in die weitere Justiertabelle eingetragen wird.

5. Verfahren nach einem der Ansprüche 1 bis 4, **dadurch gekennzeichnet, dass** zur Bestimmung der Lage der zweiten oder der höheren Oberschwingung der Abstand der Frequenzen zwischen der Eigenschwingung, insbesondere Grundschwingung, und der jeweiligen Oberschwingung anhand von Standards als eine von der Dichte und der Temperatur abhängige Funktion V bestimmt wird und mit den Standards eine Justiertabelle und/oder Justierfunktion erstellt und bereitgestellt und zur Anregung der Oberschwingung herangezogen wird.

6. Verfahren nach einem der Ansprüche 1 bis 5, **dadurch gekennzeichnet, dass** der Zusammenhang zwischen dem für die Oberschwingung ermittelten Viskositätswert und dem Dichtefehler $\Delta(\rho)$, insbesondere zu dem bei der Eigenschwingung, insbesondere Grundschwingung, ermittelten Dichtewert direkt in die erste Justiertabelle eingetragen und für die Erstellung des Zusammenhanges zwischen Dichte und Periodendauer angewandt bzw. zur Verfügung gestellt wird und die viskositätsabhängigen Justierwerte A(n) und B(n) für die Berechnung einer korrigierten Dichte viskositätsabhängig erstellt und in der ersten Justiertabelle zur Verfügung gestellt werden.

7. Verfahren nach einem der Ansprüche 1 bis 6, **dadurch gekennzeichnet, dass** als Dämpfungsparameter die Amplitude der Schwingung und/oder der Phasenwinkel zwischen der Anregung und Abnahme der Schwingung gemessen und ausgewertet werden.

8. Verfahren nach einem der Ansprüche 1 bis 7, **dadurch gekennzeichnet, dass** als Dämpfungsparameter das Abklingverhalten des Schwingers herangezogen wird.

**Claims**

1. A method for determining a corrected value for the viscosity-dependent density of a fluid to be examined with a flexural resonator, wherein

   - a first adjustment table relating to the correlation between the density of standard fluids and the period duration of the flexural resonator is provided for a resonant natural oscillation, preferably the fundamental oscillation, and
   - the flexural resonator is excited to this resonant natural oscillation and during this natural oscillation the period duration of the flexural resonator for the fluid to be examined is determined and by means of the period duration the assigned density value for the fluid to be examined is determined from the adjustment table **characterized in that**
   - for the determination of a damping parameter or viscosity value of the fluid to be examined the flexural resonator is excited to the resonant oscillation at the second or a higher harmonic and during this resonant oscillation the damping parameter of the flexural resonator is determined for the fluid to be examined or the viscosity value for the fluid to be examined assigned to this damping parameter in the second adjustment table provided, and
   - with the measured damping parameter or the viscosity value obtained a correction is made in respect to the density value obtained in the measurement of the fluid to be examined during the resonant natural oscillation.

2. A method according to Claim 1, **characterized in that** the flexural resonator is excited in the case of the second or a higher harmonic to the resonance and a further adjustment table is created, in which the correlation between the viscosity value and the measurement error $\Delta(p)$ of the density resulting in the case of this harmonic is determined and provided for a number of standard fluids and the measurement error $\Delta(p)$ assigned to the respectively measured viscosity in the further adjustment table is used for the correction of the density value determined in the case of the natural oscillation, in particular, the fundamental oscillation for the fluid to be examined.

3.  A method according to Claim 1 or 2, **characterized in that** for the determination of the situation of the second or the higher harmonic the distance of the frequencies between the natural oscillation, in particular, the fundamental oscillation, and the respective harmonic is determined and is used to excite the harmonic and, if applicable, a factor or relationship V is determined, which indicates the position of the harmonic as a multiple of the frequency of the natural oscillation.

4.  A method according to any one of Claims 1 to 3, **characterized in that** the correlation between the viscosity value determined for the harmonic and the density error $\Delta(p)$, in particular, the density error standardized for the density value determined in the case of the natural oscillation,, in particular, fundamental oscillation, is approximated with a function, which is regarded as the correlation between the measured value of the viscosity and the density error $\Delta(p)$ in the case of the second or higher harmonic and is entered into the further adjustment table.

5.  A method according to any one of Claims 1 to 4, **characterized in that** for the determination of the position of the second or the higher harmonic the distance of the frequencies between the natural oscillation, in particular, the fundamental oscillation, and the respective harmonic is determined by means of standards as a function V dependent on the density and the temperature and with the standards an adjustment table and/or adjustment function is created and provided and is used to excite the harmonic.

6.  A method according to any one of Claims 1 to 5, **characterized in that** the correlation between the viscosity value determined for the harmonic and the density error $\Delta(p)$, in particular, for the density value in the case of the natural oscillation, in particular, fundamental oscillation, is entered directly into the first adjustment table and is applied or made available for the creation of the correlation between density and period duration and the viscosity-dependent adjustment values $A(\eta)$ and $B(n)$ are created viscosity-dependently for the calculation of a corrected density and are made available in the first adjustment table.

7.  A method according to any one of Claims 1 to 6, **characterized in that** the amplitude of the oscillation and/or of the phase angle between the excitation and decrease of the oscillation are measured and evaluated as a damping parameter.

8.  A method according to any one of Claims 1 to 7, **characterized in that** the decay behavior of the resonator is used as a damping parameter.

## Revendications

1.  Procédé pour la détermination d'une valeur corrigée d'une densité dépendant de la viscosité d'un fluide à examiner avec un oscillateur à flexion,

    - un premier tableau d'ajustement concernant la relation entre la densité de fluides standard et la durée de la période de l'oscillateur à flexion pour une oscillation de résonance propre, de préférence l'oscillation de base, étant mis à disposition et
    - l'oscillateur à flexion étant excité à une oscillation de résonance propre et, lors de cette oscillation propre, la durée de la période de l'oscillateur à flexion pour le fluide à examiner ainsi que la valeur de densité correspondante sur la durée de la période étant déterminée à partir du tableau d'ajustement pour le fluide à examiner, **caractérisé en ce que**

    - pour la détermination d'un paramètre d'amortissement ou d'une valeur de viscosité du fluide à examiner, l'oscillateur à flexion étant excité, pour l'oscillation de résonance, à la deuxième harmonique ou à une harmonique supérieure et, lors de cette oscillation de résonance, le paramètre d'amortissement de l'oscillateur à flexion pour le fluide à examiner ou la valeur de viscosité correspondant à ce paramètre d'amortissement dans un deuxième tableau d'ajustement mis à disposition est déterminé pour le fluide à examiner et
    - avec le paramètre d'amortissement mesuré ou la valeur de viscosité obtenue, une correction concernant la viscosité du fluide à examiner lors de la mesure est effectuée sur la valeur de densité obtenue lors de l'oscillation de résonance propre.

2.  Procédé selon la revendication 1, **caractérisé en ce que** l'oscillateur à flexion est excité jusqu'à la résonance à la deuxième harmonique ou à une harmonique supérieure et un autre tableau d'ajustement est appliqué, dans lequel la relation entre l'erreur de mesure obtenue pour la viscosité et l'erreur de mesure $\Delta(\rho)$ de la densité à cette harmonique pour un nombre de fluides standard est déterminée et mise à disposition et l'erreur de mesure $\Delta(\rho)$ correspondant à la viscosité mesurée dans l'autre tableau d'ajustement est utilisée pour la correction de la valeur de densité déterminée lors de l'oscillation propre, plus particulièrement l'oscillation de base, pour le fluide à examiner.

3. Procédé selon la revendication 1 ou 2, **caractérisé en ce que**, pour la détermination de la position de la deuxième harmonique ou de l'harmonique supérieure, la distance des fréquences entre l'oscillation propre, plus particulièrement l'oscillation de base et l'harmonique correspondante est déterminée et utilisée pour l'excitation de l'harmonique et le cas échéant un facteur ou un rapport V est déterminé, qui indique la position de l'harmonique en tant que multiple de la fréquence de l'oscillation propre.

4. Procédé selon l'une des revendications 1 à 3, **caractérisé en ce que** la relation entre la valeur de viscosité déterminée pour l'harmonique et l'erreur de densité $\Delta(\rho)$, plus particulièrement l'erreur de densité normalisée sur la valeur de densité déterminée lors de l'oscillation propre, plus particulièrement lors de l'oscillation de base, est approximée avec une fonction qui est considérée comme une relation entre la valeur de mesure de la viscosité et l'erreur de densité $\Delta(\rho)$ lors de la deuxième harmonique ou de l'harmonique supérieure et qui est entrée dans l'autre tableau d'ajustement.

5. Procédé selon l'une des revendications 1 à 4, **caractérisé en ce que**, pour la détermination de la position de la deuxième harmonique ou de l'harmonique supérieure, la distance des fréquences entre l'oscillation propre, plus particulièrement l'oscillation de base, et l'harmonique correspondante est déterminée comme une fonction V dépendant de la densité et de la température et, avec les standards, un tableau d'ajustement et/ou une fonction d'ajustement est créée et mise à disposition et utilisée pour l'excitation de l'harmonique.

6. Procédé selon l'une des revendications 1 à 5, **caractérisé en ce que** la relation entre la valeur de viscosité déterminée pour l'harmonique et l'erreur de densité $\Delta(\rho)$, plus particulièrement par rapport à la valeur densité déterminée lors de l'oscillation propre, plus particulièrement lors de l'oscillation de base, est entrée directement dans le premier tableau d'ajustement et appliquée ou mise à disposition pour la création de la relation entre la densité et la durée de la période et les valeurs d'ajustement $A(\eta)$ et $B(\eta)$ pour le calcul d'une densité corrigée en fonction de la viscosité sont créées et mises à disposition dans le premier tableau d'ajustement.

7. Procédé selon l'une des revendications 1 à 6, **caractérisé en ce que**, en tant que paramètre d'amortissement, l'amplitude de l'oscillation et/ou l'angle de phase entre l'excitation et la diminution de l'oscillation sont mesurés et analysés.

8. Procédé selon l'une des revendications 1 à 7, **caractérisé en ce que**, en tant que paramètre d'amortissement, le comportement d'amortissement de l'oscillateur est utilisé.

Fig. 1

Figure 2

Figure 3

Fig 5

Fig 4

Fig. 6

Figure 7

Figure 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 409551